# EUROPEAN PATENT APPLICATION

(11) **EP 4 768 870 A1**
(43) Date of publication of application: **01.07.2026**
(21) Application number: 25226756.2
(22) Date of filing: 23.12.2025
(51) Int. Cl.: G01G 11/00

(54) **WEIGHING APPARATUS**

(30) Priority: 25.12.2024 JP 2024228676
(71) Applicant: Ishida Co., Ltd., Kyoto-shi Kyoto 606-8392 (JP)
(72) Inventor: TARUMOTO, Yoshinori, Ritto-shi, Shiga, 520-3026 (JP); YAMAKAWA, Atsushi, Ritto-shi, Shiga, 520-3026 (JP); SUDA, Shoji, Ritto-shi, Shiga, 520-3026 (JP)
(74) Representative: Global IP Europe Patentanwaltskanzlei

(57) **Abstract**

A weighing apparatus weighs articles and include a conveyance unit that conveys the articles, a weighing unit, and a control unit. The weighing unit outputs an original signal corresponding to forces acting on the conveyance unit. The control unit controls the conveyance unit and applies digital filters to the original signal. The control unit executes a selection process (S4 to S6) to select one of the digital filters out of a plurality of the digital filters. The control unit executes the selection process based on results of applying a plurality of the digital filters to the original signal during a period from when it sends a stop instruction to the conveyance unit to until the conveyance unit stops.

## Description

### BACKGROUND

### TECHNICAL FIELD

This invention relates to a weighing apparatus.

### RELATED ART

As disclosed in patent document 1 (domestic re-publication of PCT International Application WO2015/141670), a weighing apparatus that applies a plurality of digital filters to an original signal output from a weighing unit is known.

### SUMMARY

### TECHNICAL PROBLEM

In a weighing apparatus that performs processing using a plurality of digital filters, often an expert sets a digital filter according to the articles to be weighed and the environment.

However, when the digital filter is manually set, an appropriate setting may not be made if the person doing the setting has a low proficiency level, and high-accuracy weighing may not be performed.

It is a problem of this invention to provide a weighing apparatus in which an appropriate digital filter is selected.

### SOLUTION TO PROBLEM

A weighing apparatus pertaining to a first aspect is a weighing apparatus that weighs articles. The weighing apparatus includes a conveyance unit that conveys the articles, a weighing unit, and a control unit. The weighing unit outputs an original signal corresponding to forces acting on the conveyance unit. The control unit controls the conveyance unit and applies digital filters to the original signal. The control unit executes a selection process to select one of the digital filters out of a plurality of the digital filters. The control unit executes the selection process based on results of applying a plurality of the digital filters to the original signal during a period from when it sends a stop instruction to the conveyance unit to until the conveyance unit stops.

In the weighing apparatus pertaining to the first aspect, the selection process is executed by the control unit during a period in which the conveyance unit is running after the control unit sends the stop instruction to the conveyance unit. Because of this, a digital filter according to the articles to be weighed and the environment is appropriately automatically selected.

Furthermore, in the weighing apparatus pertaining to the first aspect, the period from when the control unit sends the stop instruction to the conveyance unit to until the conveyance unit stops is utilized, and this period is allocated to the selection process. Because of this, in the weighing apparatus pertaining to the first aspect, it becomes unnecessary to ensure extra time for the selection process, or, the amount of time allocated to the selection process after the conveyance unit stops can be shortened.

A weighing apparatus pertaining to a second aspect is the weighing apparatus of the first aspect, wherein the control unit executes the selection process during an initial setting prior to weighing the articles.

In the weighing apparatus pertaining to the second aspect, the selection process by the control unit is performed not from when production of the articles actually starts on the production line of the articles including the weighing apparatus but at the stage of the initial setting prior to production. As described above, since in this invention the period is effectively utilized, the amount of time required for the initial setting can be shortened.

A weighing apparatus pertaining to a third aspect is the weighing apparatus of the first aspect or the second aspect, wherein the control unit determines the number of the digital filters to apply to the original signal in accordance with the length of a time limit when applying the digital filters in the selection process.

In a weighing apparatus, the amount of time used to weigh each of the articles changes depending on the parameters of the speed at which the articles are conveyed by the conveyance unit, the length of the articles, and the size of the conveyance unit. Additionally, due to those parameters, the time limit when applying the digital filters also changes. In light of this, in the weighing apparatus pertaining to the third aspect, the control unit determines the number of the digital filters to apply to the original signal in accordance with the length of the time limit when applying the digital filters. Because of this, the time limit can be followed.

A weighing apparatus pertaining to a fourth aspect is the weighing apparatus of the first aspect or the second aspect, wherein the control unit executes the selection process based on results of applying a predetermined group of the digital filters to the original signal in the selection process.

In the weighing apparatus pertaining to the fourth aspect, the control unit executes the selection process based on results of applying a predetermined group of the digital filters to the original signal. Because of this, an appropriate digital filter is selected.

A weighing apparatus pertaining to a fifth aspect is the weighing apparatus of the fourth aspect, wherein the group of the digital filters are digital filters for removing a vibration component that occurs when the conveyance unit is conveying the articles.

In the weighing apparatus pertaining to the fifth aspect, digital filters for removing as noise a vibration component of the original signal higher than several dozen Hz, such as a vibration component that occurs when the articles change conveyors in the conveyance unit and a vibration component that occurs when the articles being conveyed come into contact with guide members or the like, are used as the group of the digital filters.

A weighing apparatus pertaining to a sixth aspect is the weighing apparatus of the first aspect or the second aspect, wherein the control unit acquires from the weighing unit an original signal when another apparatus adjacent, upstream or downstream, to the weighing apparatus is running.

In the weighing apparatus pertaining to the sixth aspect, since the control unit acquires the original signal while an adjacent apparatus that physically affects the articles being conveyed and the conveyance unit is running when the production line is actually running, a selection process reflecting actual conditions when the production line is running is performed.

A weighing apparatus pertaining to a seventh aspect is the weighing apparatus of any of the first aspect to the sixth aspect, further including a display unit. The display unit displays the results of applying a plurality of the digital filters to the original signal.

A weighing apparatus pertaining to an eighth aspect is the weighing apparatus of any of the first aspect to the seventh aspect, wherein during the period from when the control unit sends a stop instruction to the conveyance unit to until the conveyance unit stops, the operating speed of the conveyance unit gradually becomes slower.

A weighing apparatus pertaining to a ninth aspect is the weighing apparatus of any of the first aspect to the seventh aspect, wherein the period from when the control unit sends a stop instruction to the conveyance unit to until the conveyance unit stops is a period from when the control unit sends a stop instruction to the conveyance unit to until the conveyance unit naturally stops.

A weighing apparatus pertaining to a tenth aspect is the weighing apparatus of any of the first aspect to the seventh aspect, further including a brake. The brake is provided to stop the operation of the conveyance unit. The control unit executes the selection process based on results of applying a plurality of the digital filters to the original signal during a period from when it sends a stop instruction to the conveyance unit and sends an actuation instruction to the brake to until the conveyance unit stops.

### ADVANTAGEOUS EFFECTS OF THE INVENTION

According to this invention, a digital filter according to the articles to be weighed and the environment is appropriately automatically selected. Furthermore, it becomes unnecessary to ensure extra time for the selection process, or, the amount of time allocated to the selection process after the conveyance unit stops can be shortened.

### BRIEF DESCRIPTION OF THE DRAWINGS

FIG. 1 is a drawing showing the schematic configuration of a weighing apparatus of an embodiment of the invention;
FIG. 2 is a drawing showing functional configurations of a control unit of the weighing apparatus;
FIG. 3 is a flowchart for describing a method of selecting a digital filter during an initial setting;
FIG. 4A is a drawing showing a waveform included in an original signal;
FIG. 4B is a drawing showing a waveform after the waveform shown in FIG. 4A has been filtered;
FIG. 5A is an enlarged drawing showing a plurality of weighing results obtained by applying a default digital filter; and
FIG. 5B is an enlarged drawing showing a plurality of weighing results obtained by applying one digital filter different from the default digital filter.

### DETAILED DESCRIPTION

An embodiment of the invention will be described below with reference to the drawings. It will be noted that the following embodiment is a specific example of the invention and is not intended to limit the technical scope of the invention. Furthermore, identical or corresponding parts in the drawings are assigned identical reference signs, and redundant description will be omitted.

### (1) Overall Configuration of Weighing Apparatus

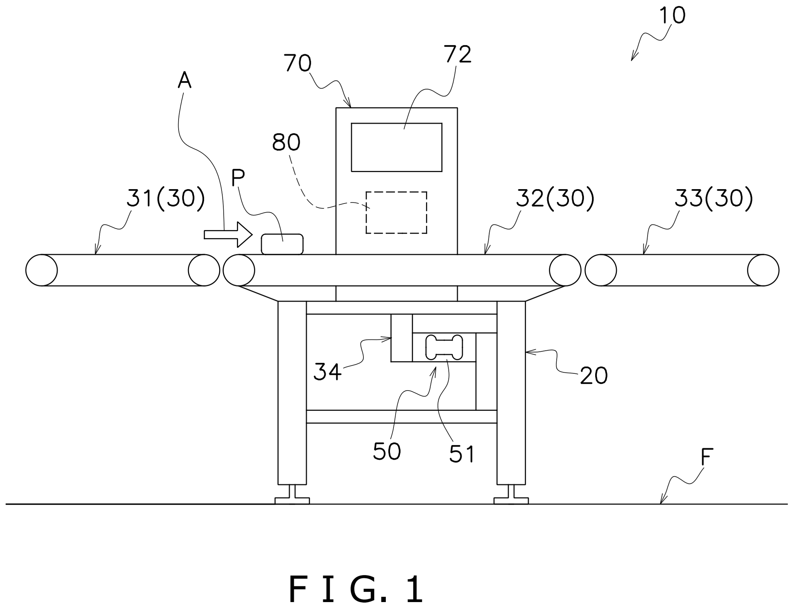

FIG. 1 is a drawing schematically showing a weighing apparatus 10 pertaining to this embodiment. The weighing apparatus 10 shown in FIG. 1 is an apparatus that weighs objects to be measured while conveying them in the direction of outline arrow A in FIG. 1 (hereinafter, simply "the conveyance direction"). The weighing apparatus 10 is an apparatus disposed on a production line of products. The objects to be measured are articles P (products) extending along the conveyance direction. The weighing apparatus 10 includes a frame 20, a conveyance unit 30, a weighing unit 50, an operation unit 70 having a touch panel 72, and a control unit 80.

### (2) Configuration of Conveyance Unit

The conveyance unit 30 is a conveyance device that conveys the articles P along the conveyance direction and is, for example, a conveyor. The conveyance unit 30 conveys the articles P at a conveyance speed designated via the touch panel 72 of the operation unit 70. The conveyance speed is designated by a user via the touch panel 72. The conveyance unit 30 has a first conveyor 31, a second conveyor 32, and a third conveyor 33. The first conveyor 31, the second conveyor 32, and the third conveyor 33 each have rollers, a rotating body such as a motor, a conveyance belt, etc. The first conveyor 31, the second conveyor 32, and the third conveyor 33 are arranged in this order from upstream in the conveyance direction. That is, the second conveyor 32 is positioned between the first conveyor 31 and the third conveyor 33 in the conveyance direction. The first conveyor 31 is a conveyor that conveys the articles P to the second conveyor 32. The first conveyor 31 may have, for example, a metal detector not shown in the drawings. The second conveyor 32 is a conveyor that conveys the articles P that have been conveyed to it from the first conveyor 31 to the third conveyor 33. The third conveyor 33 is a conveyor that conveys the articles P out from the second conveyor 32. The third conveyor 33 has, for example, a sorter (not shown in the drawings) that sorts the articles P whose weight deviates from an appropriate range.

The weighing unit 50 is attached to the second conveyor 32. The articles P conveyed by the conveyance unit 30 are weighed by the weighing unit 50 when they are on the second conveyor 32.

### (3) Configuration of Frame

The frame 20 is a member that supports the weighing unit 50 and is secured to a floor F under the second conveyor 32.

### (4) Configuration of Weighing Unit

The weighing unit 50 is a unit that weighs the articles P that are on the second conveyor 32 and is positioned in the center of the conveyance unit 30. The weighing unit 50 mainly has a load cell 51 and an A/D converter that is not shown in the drawings. The weighing unit 50 outputs original signals corresponding to forces acting on the conveyance unit 30.

In the load cell 51, a plurality of strain gauges adhered to a strain element are connected to a Wheatstone bridge circuit. Furthermore, in the load cell 51, electrical signals according to loads transmitted from the strain gauges are extracted from the Wheatstone bridge circuit. The electrical signals are analog original signals representing the weighing results of the articles P obtained by the load cell 51. The analog original signals are converted into digital original signals by the A/D converter. The weighing unit 50 outputs the digital original signals as original signals to the outside.

The strain element of the load cell 51 has one end (the right end in FIG. 1) secured to the frame 20 and another end (the left end in FIG. 1) secured to the lower portion of a rigid member 34. The rigid member 34 is a member that supports the second conveyor 32, and its upper portion is secured to the second conveyor 32.

### (5) Configuration of Operation Unit

The operation unit 70 is provided to operate the conveyance unit 30 and the weighing unit 50 and is erectly disposed in the vicinity of the second conveyor 32. The operation unit 70 mainly has the touch panel 72 and the control unit 80.

### (5-1) Touch Panel

The touch panel 72 is a display unit that displays images based on display information output from the control unit 80 and is a reception unit that receives the input of instructions by the user. The touch panel 72 displays weigh signals obtained by filtering the original signals, weigh values representing the weighing results of the articles P, accuracy information for evaluating the accuracy of the weigh values, the conveyance speed of the conveyance unit 30, the dimension of the articles P along the conveyance direction, the conveyance frequency of the articles P, the weighing pitch of the articles P, etc. When the touch panel 72 receives input from the user, input information representing the input content is output from the touch panel 72 to the control unit 80. The input information is data relating to the conveyance speed of the conveyance unit 30, the dimension of the articles P along the conveyance direction, the type of the articles P, and the conveyance frequency of the articles P. The conveyance frequency of the articles P is set based on the capacity of a production machine positioned upstream of the weighing apparatus 10.

The weigh values of the articles P and the accuracy information are data obtained based on the original signals sent from the weighing unit 50 to the operation unit 70. The weigh values are calculated by a known method. Furthermore, the weighing pitch of the articles P is calculated by the control unit 80 based on the conveyance speed of the conveyance unit 30, the dimension of the articles P, and the conveyance frequency of the articles P. The conveyance frequency of the articles P is set based on the capacity of a production machine positioned upstream of the weighing apparatus 10.

### (5-2) Control Unit

The control unit 80 is a controller that controls each part of the weighing apparatus 10 and is built into the operation unit 70. The control unit 80 is a computer configured by a CPU, a RAM, and a ROM, for example. The control unit 80 sends an operation signal to the conveyance unit 30 so that the conveyance speed of the conveying unit 30 is set to the conveyance speed designated via the touch panel 72. Furthermore, when the third conveyor 33 is provided with a sorter and the control unit 80 judges that the weight of an article P deviates from a preset appropriate range, the control unit 80 sends an operation signal to the sorter to sort that article P (exclude it from the production line).

It will be noted that the control unit 80 does not just control each part of the weighing apparatus 10 but also functions as a processing unit that receives, performs operations on, and sends various types of signals and records and reads various types of signals.

An example of an operation performed on the various types of signals by the control unit 80 is deriving the weighing results of the articles P. The control unit 80 has, for example, a drive circuit for outputting control signals for controlling the conveyance unit 30, a drive circuit for performing operations on the weigh values of the articles P from the original signals generated by the weighing unit 50, a drive circuit for performing operations on the accuracy information from the original signals, and a storage circuit for storing each signal and each piece of information.

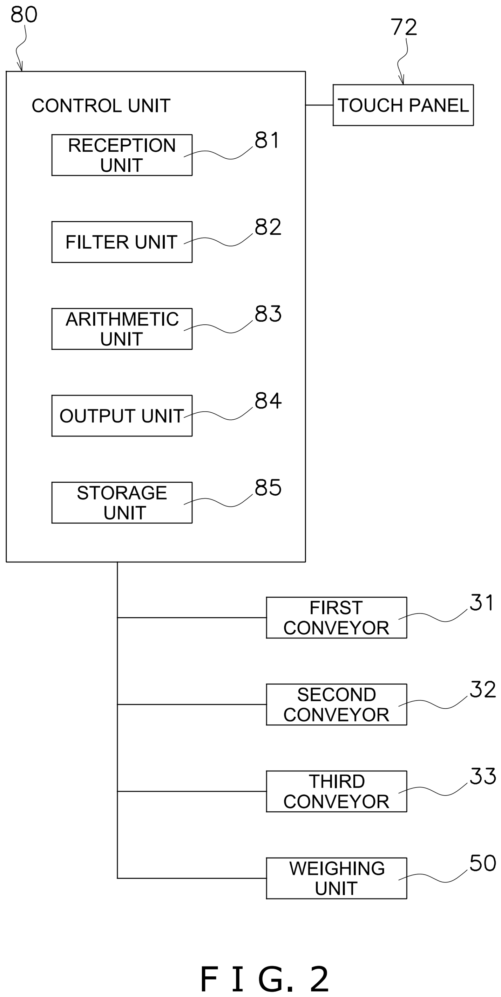

FIG. 2 is a drawing showing functional configurations of the control unit. As shown in FIG. 2, the control unit 80 has, as functional configurations, a reception unit 81, a filter unit 82, an arithmetic unit 83, an output unit 84, and a storage unit 85.

### (5-2-1) Reception Unit

The reception unit 81 is a part that receives the original signals sent from the weighing unit 50 and input information sent from the touch panel 72. The sending of the original signals from the weighing unit 50 to the reception unit 81 and the sending of the input information from the touch panel 72 to the reception unit 81 may each be implemented via wires or wirelessly.

### (5-2-2) Filter Unit

The filter unit 82 is a part that uses a preset plurality of digital filters to filter the original signals output from the weighing unit 50. That is, the filter unit 82 applies digital filters to the original signals. Each of the plural digital filters is configured by a low-pass filter that attenuates frequency components exceeding a predetermined frequency, a notch filter (a band-stop filter) that attenuates noise at the frequency of the rotating body included in the conveyance unit 30, etc. When at least some of the plural digital filters are selected, the filter unit 82 implements a multi-stage filtering process on the original signals. Each of the digital filters includes one or a plurality of the low-pass filters and one or a plurality of the notch filters. The plural digital filters may each include low-pass filters having a different attenuation level for each frequency band and may include notch filters that attenuate mutually different frequency bands. The plural low-pass filters may, for example, be known variable filters described in Japanese Patent No. 5901126.

The filter unit 82 uses one of the digital filters selected in advance out of the plural digital filters to filter the original signals when the conveyance unit 30 is in operation and while the articles P are being conveyed. Additionally, the filter unit 82 outputs signals (weigh signals) obtained by filtering the original signals. The obtained weigh signals are output to, for example, the arithmetic unit 83 and the storage unit 85 that are included in the control unit 80 shown in FIG. 1. The weigh signals have waveforms adjusted to calculate the weights of the articles P.

The filter unit 82 obtains an original signal when the conveyance unit 30 is in operation and the articles P are not being conveyed by the conveyance unit 30 (hereinafter also called "when the conveyance unit 30 is dry running") during an initial setting of the weighing apparatus 10 (a setting process prior to weighing the articles P). Additionally, the filter unit 82 applies each of a plurality of digital filters to the original signal. In other words, the filter unit 82 implements a filtering process to apply each of a plurality of digital filters to the original signal acquired when the conveyance unit 30 is dry running. Because of this, the filter unit 82 generates a plurality of weigh signals that are the results of applying each of the plurality of digital filters to the original signal obtained when the conveyance unit 30 is dry running. Additionally, the filter unit 82 outputs the plural weigh signals to, for example, the arithmetic unit 83 and the storage unit 85. As described below, the filtering process and the generation of the plural weigh signals are performed during a period from when the control unit 80 sends a stop instruction to the conveyance unit 30 to until the conveyance unit 30 stops.

In this embodiment, information output from the weighing unit 50 when the conveyance unit 30 is dry running at the conveyance speed designated via the touch panel 72 corresponds to the original signal obtained when the conveyance unit 30 is in operation and the articles P are not being conveyed by the conveyance unit 30. For example, when the plurality of digital filters comprise a first filter to a third filter, the filter unit 82 implements the filtering process using each of the first filter to the third filter on the original signal. Because of this, a first weigh signal obtained as a result of the first filter being applied, a second weigh signal obtained as a result of the second filter being applied, and a third weigh signal obtained as a result of the third filter being applied are generated by the filter unit 82.

### (5-2-3) Arithmetic Unit

The arithmetic unit 83 calculates the various types of information that have been input. The arithmetic unit 83 calculates the weights of the articles P based on the weigh signals output from the filter unit 82 during normal operation (production mode) when the conveyance unit 30 is in operation and the articles P are being conveyed. Because of this, the arithmetic unit 83 generates weigh values for the articles P. The arithmetic unit 83 sends the generated weigh values to the output unit 84. The arithmetic unit 83 calculates the weighing pitch (weighing intervals) of the articles P using the conveyance speed of the conveyance unit 30, the dimension of the articles P, and the conveyance frequency that have been input. The arithmetic unit 83 judges whether the weights of the articles P deviate from the preset appropriate range based on the weigh values of the articles P it has generated. In accordance with the judgment results, the arithmetic unit 83 outputs an operation signal to the sorter, for example.

Furthermore, the arithmetic unit 83 selects one of the digital filters out of a plurality of the digital filters based on the results of applying each of the plural digital filters to the original signal obtained when the conveyance unit 30 is in operation and the articles P are not being conveyed by the conveyance unit 30. The digital filter selection process is performed during a period from when the control unit 80 sends a stop instruction to the conveyance unit 30 to until the conveyance unit 30 stops during the initial setting of the weighing apparatus 10.

In this embodiment, the arithmetic unit 83 first generates plural pieces of accuracy information based on the plural weigh signals obtained when the conveyance unit 30 is dry running. Next, the arithmetic unit 83 compares the plural pieces of accuracy information to determine the most appropriate piece of accuracy information and/or weigh signal. Next, the arithmetic unit 83 selects the digital filter corresponding to the determined piece of accuracy information and/or weigh signal. Then, the arithmetic unit 83 outputs to the storage unit 85 the determined piece of accuracy information and/or weigh signal and information relating to the selected digital filter.

The accuracy information is calculated based on, for example, standard deviations of the amplitudes of the waveforms included in the weigh signals. The calculation results may be the standard deviations themselves of the amplitudes of the waveforms or parameters based on the standard deviations. In this embodiment, the accuracy information is the standard deviations of the amplitudes of the waveforms included in the weigh signals. The arithmetic unit 83 compares the standard deviations of the amplitudes of each of the waveforms obtained by applying each of the plural digital filters to the original signal and selects the digital filter with which the smallest standard deviation is obtained. When the plural digital filters comprise a first filter to a third filter, the arithmetic unit 83 acquires from the filter unit 82 a first standard deviation of the amplitude of the waveform included in the first weigh signal, a second standard deviation of the amplitude of the waveform included in the second weigh signal, and a third standard deviation of the amplitude of the waveform included in the third weigh signal. Next, the arithmetic unit 83 identifies the weigh signal with which the smallest value is obtained out of the first standard deviation, the second standard deviation, and the third standard deviation. Then, the arithmetic unit 83 selects the digital filter that was applied by the identified weigh signal.

Furthermore, the arithmetic unit 83 determines the number of the digital filters to be used in the selection process in accordance with the length of a time limit when applying the digital filters. The time limit when applying the digital filters is the amount of time that can be spent on one article P and is an amount of time determined by parameters such as the speed at which the conveyance unit 30 conveys the articles P, the length of the articles P in the conveyance direction, and the length of the conveyance unit 30 in the conveyance direction. In the range of this time limit, for example, the arithmetic unit 83 extracts a plurality of the digital filters from among the variable filters and calculates the standard deviations of each of the digital filters as described above.

The waveforms included in the weigh signals include vibration caused by the weighing apparatus 10 and its environment. The vibration becomes noise with respect to the weighing of the articles P. For this reason, it can be judged that the smaller the standard deviation of the amplitude of the waveform is, the smaller the noise is with respect to the weighing of the articles P. Vibration caused by the weighing apparatus 10 includes vibration caused by the operation of the conveyance unit 30, vibration caused when the articles P are transferred onto the conveyance unit 30, etc. For example, vibration caused when the articles P are transferred onto the conveyance unit 30 is noise higher than several dozen Hz that the user wants to remove by applying a filter. Vibration caused by the environment of the weighing apparatus 10 is, for example, vibration transmitted from the floor F on which the weighing apparatus 10 is installed (vibration of the floor F). The vibration of the floor F is vibration caused by, for example, plural apparatus installed on the production line of the articles P including the weighing apparatus 10 and other apparatus not included in the production line.

### (5-2-4) Output Unit

The output unit 84 outputs to the outside various types of information and various types of signals generated by the control unit 80 and various types of information and various types of signals stored in the storage unit 85. The output unit 84 outputs the weigh values of the articles P, the accuracy information, and the weighing pitch as display information to the touch panel 72. The output unit 84 outputs to the conveyance unit 30 an operation signal for controlling the conveyance speed of the conveyance unit 30. The output unit 84 outputs to the sorter an operation signal with respect to the sorter.

The one digital filter selected during the initial setting of the weighing apparatus 10 is output as display information to the touch panel 72.

### (5-2-5) Storage Unit

The storage unit 85 stores input information input via the touch panel 72 and various types of information and various types of signals generated by the control unit 80. The storage unit 85 stores the preset plurality of digital filters. The storage unit 85 stores the date and time when the one digital filter out of the plurality of digital filters was selected based on the results of applying each of the plurality of digital filters to the original signal obtained when the conveyance unit 30 was dry running. In addition, the storage unit 85 stores the one digital filter selected at that time and date, the original signal itself, and the weigh signals, weigh values, and accuracy information based on the original signal.

### (6) Function of Automatically Selecting Digital Filter in Initial Setting

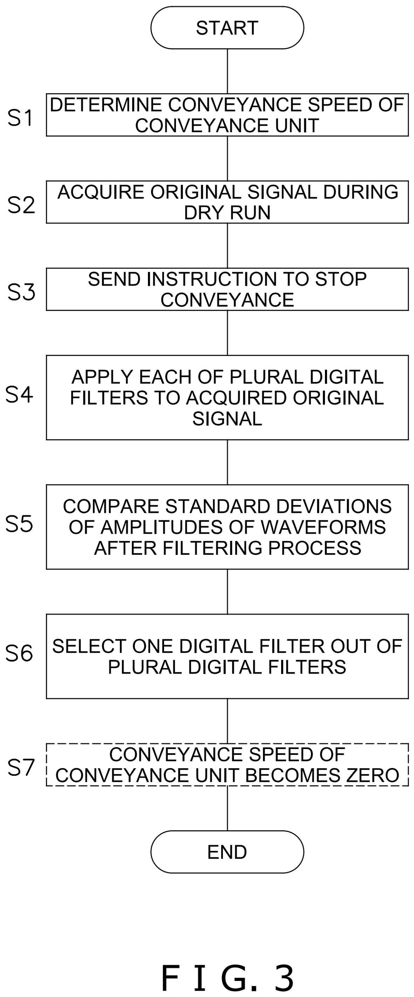

Next, a method in which the weighing apparatus 10 pertaining to this embodiment automatically selects a digital filter during the initial setting will be described with reference to FIG. 3. The initial setting is one function in a reservation setting mode selected in a test operation or the like.

First, the control unit 80 determines the conveyance speed of the conveyance unit 30 (step S1). In step S1, the conveyance speed of the conveyance unit 30 is designated via the touch panel 27. At this time, the user may input the conveyance speed itself of the conveyance unit 30 via the touch panel 72 or may input the conveyance frequency of the articles P. In the latter case, the conveyance speed of the conveyance unit 30 is calculated by the control unit 80. The control unit 80 may use as the conveyance speed a value obtained by multiplying a predetermined value (margin value) by the input speed or the calculated speed. In this case, asynchrony in the supply timing of the articles P occurring upstream of the weighing apparatus 10 can be corrected.

Next, the weighing unit 50 acquires the original signal when the conveyance unit 30 is activated in a state in which the articles P are not being conveyed (i.e., when the conveyance unit 30 is caused to dry run) (step S2). In step S2, for example, the weighing unit 50 acquires the original signal when the conveyance unit 30 is caused to dry run for about 5 seconds at the designated conveyance speed before weighing the articles P. The acquired original signal is output to the control unit 80.

Next, the control unit 80 sends an instruction to stop conveyance to the conveyance unit 30 (step S3). Specifically, the control unit 80 sends an instruction to stop operating to the motors driving the first conveyor 31, the second conveyor 32, and the third conveyor 33 of the conveyance unit 30. The first conveyor 31, the second conveyor 32, and the third conveyor 33 of the conveyance unit 30 continue to run due to inertia even after the motors receive the stop instruction, but the conveyance speed naturally decreases and the conveyors come to a complete stop after about 1 second. During this period of about 1 second (the period from when the control unit 80 sends the stop instruction to the conveyance unit 30 to until the conveyance unit 30 stops), the following processes of step S4 to step S6 are performed. The processes of step S4 to step S6 are the selection process to select one of the digital filters out of a plurality of the digital filters based on the results of applying the plurality of the digital filters to the original signal. It will be noted that, as described above, a plurality of the digital filters that complete the filtering process within the time limit determined by the conveyance speed of the articles P, the length of the articles P in the conveyance direction, and the length of the conveyance unit 30 in the conveyance direction, for example, are chosen.

In step S4, the filter unit 82 of the control unit 80 applies each of the plural digital filters to the original signal acquired in step S2. That is, the filter unit 82 performs the filtering process by applying each of the plural digital filters to the original signal. Because of this, the filter unit 82 generates a plurality of weigh signals.

In step S5, the arithmetic unit 83 of the control unit 80 compares the standard deviations of the amplitudes of each of the waveforms after the filtering process. In step S5, first, the arithmetic unit 83 calculates the standard deviations of the amplitudes of the waveforms included in each of the plural weigh signals. Next, the arithmetic unit 83 compares the magnitudes of the standard deviations. Here, the arithmetic unit 83 determines the waveform with which the smallest standard deviation is obtained out of the plural standard deviations.

Next, the arithmetic unit 83 selects one of the digital filters out of the plurality of digital filters (step S6). In step S6, the arithmetic unit 83 selects the digital filter that was used to generate the weigh signal having the waveform with which the smallest standard deviation was obtained. The selected digital filter may be a digital filter used in a default setting (a default digital filter) out of the plurality of digital filters or may be a digital filter different from the default digital filter.

Due to steps S1 to S6 described above, the digital filter to be used when weighing the articles P at the designated conveyance speed is automatically set and reserved prior to implementing weighing of the articles P. The set and reserved digital filter and the results of applying the plural digital filters are displayed on the touch panel 72.

Step S7 of FIG. 3 is not a process performed directly by the control unit 80 but indicates that the conveyance speed of the conveyance unit 30 naturally becomes zero as a result of a certain amount of time elapsing after the instruction to stop conveyance in step S3 is sent. Here, the conveyance speed of the conveyance unit 30 gradually decreases after the control unit 80 sends the stop instruction to the conveyance unit 30, and the conveyance unit 30 naturally stops after a certain amount of time.

### (7) Characteristics of Weighing Apparatus

### (7-1)

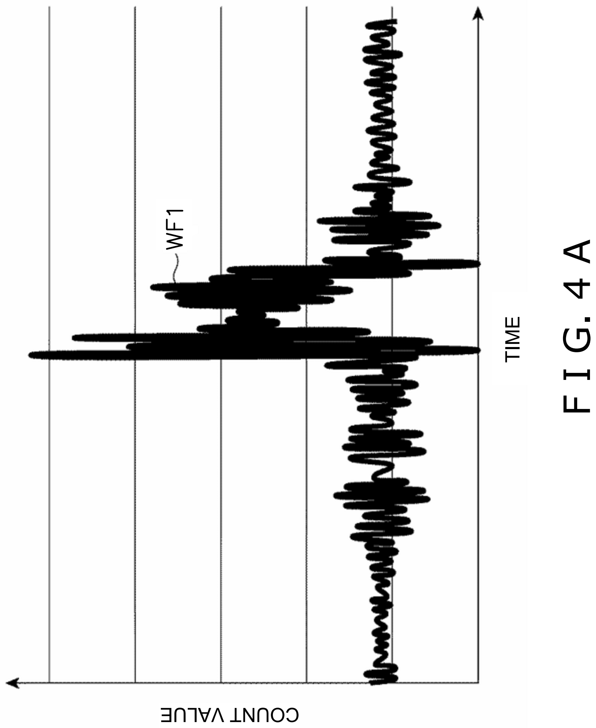

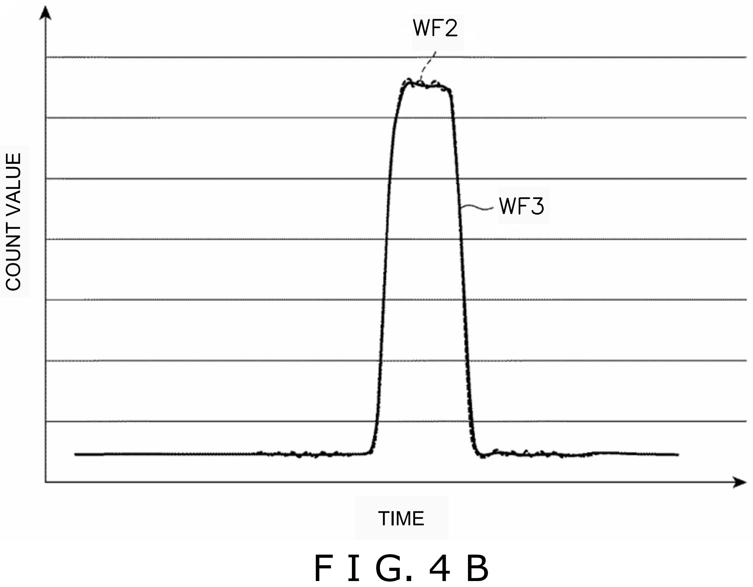

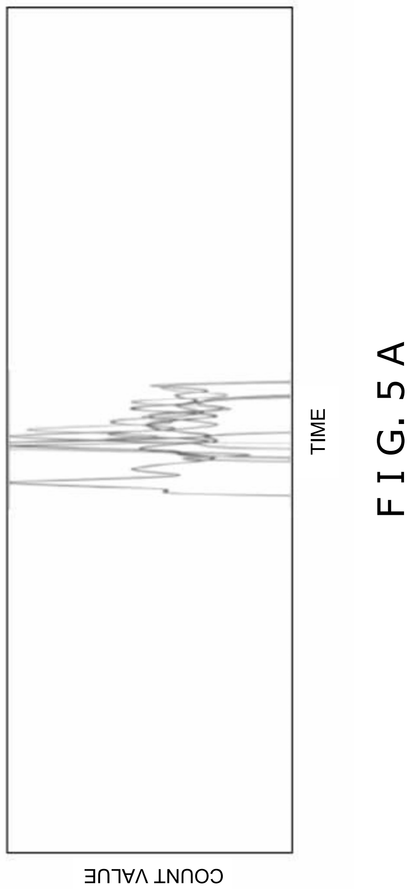

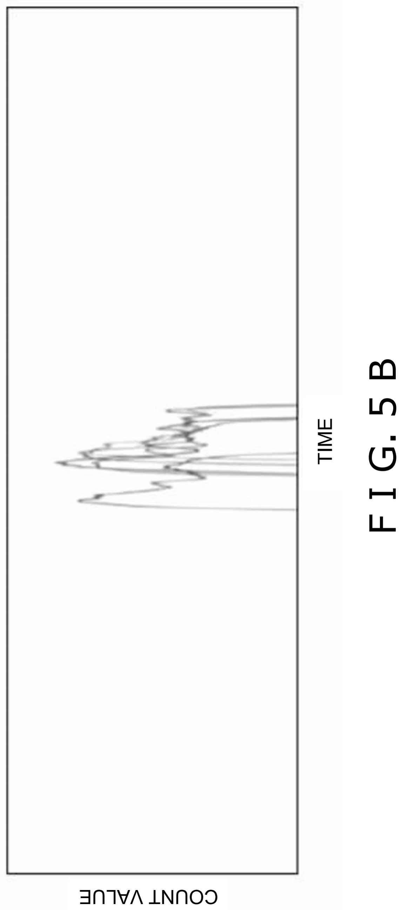

First, the basic action and effects achieved by the weighing apparatus 10 will be described with reference to FIG. 4A, FIG. 4B, FIG. 5A, and FIG. 5B. FIG. 4A is a drawing showing a waveform included in an original signal. FIG. 4B is a drawing showing a waveform after the waveform shown in FIG. 4A has been filtered.

FIG. 4A shows a waveform WF1 for calculating the weight of an article P acquired by the weighing unit 50 of the weighing apparatus 10 when the conveyance unit 30 is driven at a predetermined speed. The waveform WF 1 includes noise caused by the weighing apparatus 10 and its environment. For this reason, usually the waveform WF1 is filtered to remove the noise.

FIG. 4B shows waveforms WF2 and WF3 after the waveform WF1 has been filtered. The waveform WF2 is a waveform obtained by applying the digital filter used in the default setting (default digital filter) out of the plural digital filters. The waveform WF3 is a waveform obtained by applying one of the digital filters that is different from the default digital filter out of the plural digital filters. According to FIG. 4B, the noise of the waveform WF3 tends to be removed more than in the waveform WF2. Thus, when the weighing apparatus 10 weighs the articles P at the predetermined speed, the articles P are presumably weighed more accurately by applying the one digital filter than the default digital filter.

To confirm the above assumption, weighing results of a plurality of the articles P are compared and considered below. FIG. 5A is an enlarged drawing showing a plurality of weighing results obtained by applying the default digital filter. FIG. 5B is an enlarged drawing showing a plurality of weighing results obtained by applying the one digital filter different from the default digital filter. As shown in FIG. 5A and FIG. 5B, the amplitudes of the plural waveforms are smaller when the one digital filter is applied than when the default digital filter is applied. For this reason, the standard deviations of the amplitudes of the waveforms are also smaller when the one digital filter is applied. Consequently, it can be seen that when the weighing apparatus 10 weighs the articles P at the predetermined speed, the weighing performance of the weighing apparatus 10 can be more sufficiently exhibited when the one digital filter is applied than when the default digital filter is applied.

Here, according to the weighing apparatus 10 pertaining to this embodiment, the arithmetic unit 83 of the control unit 80 selects one of the digital filters out of a plurality of the digital filters based on results of applying each of a plurality of the digital filters to the original signal obtained when the conveyance unit 30 is dry running during the initial setting. Because of this, a digital filter suited to the weighing apparatus 10 and its environment (e.g., vibration of the weighing apparatus 10 itself and vibration transmitted from outside to the weighing apparatus 10) can be automatically selected. In other words, a digital filter that can appropriately remove noise caused by the weighing apparatus 10 and its environment can be automatically selected. For this reason, even if the designer of the weighing apparatus 10 does not set a digital filter based on the results of applying each of the plural digital filters, the weighing apparatus 10 can accurately weigh the articles P using the digital filter with which the noise has been appropriately removed. Consequently, the weighing apparatus 10 can improve work efficiency and sufficiently exhibit weighing performance.

### (7-2)

In the weighing apparatus 10, the selection process is executed by the control unit 80 during the period in which the conveyance unit 30 is running after the control unit 80 sends the stop instruction to the conveyance unit 30. In other words, the selection process is executed by the control unit 80 while the conveyance unit 30 is naturally decelerating after the stop instruction. Because of this, a digital filter according to the articles P to be weighed and the environment can be appropriately automatically selected.

Furthermore, in the weighing apparatus 10, the period until the conveyance unit 30 stops after the stop instruction is effectively utilized, and this period is allocated to the selection process. Because of this, in the weighing apparatus 10, it becomes unnecessary to ensure extra time for the selection process.

### (7-3)

In the weighing apparatus 10, the digital filter selection process by the control unit 80 is performed not from when production of the articles P actually starts on the production line of the articles P including the weighing apparatus 10 but at the stage of the initial setting prior to production. Additionally, as described above, since in the weighing apparatus 10 the period until the conveyance unit 30 stops is effectively utilized, the amount of time required for the initial setting can be shortened.

### (7-4)

Usually, in a weighing apparatus, the amount of time used to weigh each of the articles changes depending on the parameters of the speed at which the articles are conveyed by the conveyance unit, the length of the articles, and the size of the conveyance unit. Additionally, due to those parameters, the time limit when applying the digital filters also changes.

In light of this, in the weighing apparatus 1 pertaining to this embodiment, the control unit 80 determines the number of the digital filters to apply to the original signal in accordance with the length of the time limit when applying the digital filters. Consequently, the digital filters that are used in the selection process are all those that fit the time limit. Because of this, an appropriate digital filter is selected in the selection process.

### (7-5)

In the weighing apparatus 10 pertaining to this embodiment, one group of digital filters used in the selection process are digital filters for removing a vibration component that occurs when the conveyance unit 30 is conveying the articles P. In the weighing apparatus 10, digital filters for removing as noise a vibration component of the original signal higher than several dozen Hz are chosen as the group of digital filters. Because of this, a vibration component that occurs when the articles P change conveyors in the conveyance unit 30 and a vibration component that occurs when the articles P being conveyed come into contact with guide members disposed on the sides of the conveyors can be removed as noise.

### (7-6)

In the weighing apparatus 10 pertaining to this embodiment, the control unit 80 acquires from the weighing unit 50 an original signal when other apparatus adjacent, upstream and downstream, to the weighing apparatus 10 are running. In this way, since the control unit 80 acquires the original signal while adjacent apparatus that physically affect the articles P being conveyed and the conveyance unit 30 are running when the production line is actually running, a selection process reflecting actual conditions when the production line is running is performed.

It will be noted that examples of the adjacent apparatus include an apparatus for supplying the articles P, another weighing apparatus, an inspection apparatus that checks the weights of the articles P and checks for contaminants, an intake conveyor, a sorting apparatus, and a box packing apparatus.

### (8) Example Modifications

### (8-1)

In the above weighing apparatus 10, a plurality of the digital filters that complete the filtering process within the time limit determined by the conveyance speed of the articles P, the length of the articles P in the conveyance direction, the length of the conveyance unit 30 in the conveyance direction, and the like are chosen by the control unit 80 and used in the automatic selection of the digital filter during the initial setting. Instead of this, a group of predetermined and manually input digital filters may be stored in the storage unit 85, and this group of digital filters may be used in the selection process.

### (8-2)

In the above weighing apparatus 10, the selection process is executed by the control unit 80 during the period in which the conveyance unit 30 is running after the control unit 80 has sent the stop instruction to the conveyance unit 30. This period, i.e., the amount of time from when the conveyance unit 30 receives the stop instruction to until it decelerates and naturally stops, is 1 sec, for example. By contrast, the calculation time required for the digital filter selection process is 300 to 400 mmsec, for example. In this case, the weighing apparatus 10 may include a brake to further shorten the amount of time required for the initial setting.

The brake is provided to stop the operation of the conveyance unit 30 and shortens the amount of time until the conveyance unit 30 stops in conjunction with the control unit 80 sending the stop instruction to the conveyance unit 30. Because of this, the amount of time required for the initial setting can be shortened.

### (8-3)

In the above weighing apparatus 10, the digital filter selection process executed during the period from when the control unit 80 sends a stop instruction to the conveyance unit 30 to until the conveyance unit 30 stops is performed during the initial setting. Instead of or in addition to this, the digital filter selection process may be executed after a stop instruction has been sent to the conveyance unit 30 during normal operation (production mode).

### (8-4)

In the above weighing apparatus 10, the selection process by the control unit 80 is completed during the period in which the conveyance unit 30 is running after the control unit 80 has sent a stop instruction to the conveyance unit 30. However, the selection process need not be invariably completed during that period. For example, half of the selection process may be performed during that period, and the rest of the selection process may continue to be performed after the conveyance unit 30 stops. In this case, the invention obtains the advantage that the amount of time allocated to the selection process after the conveyance unit 30 stops is shortened.

### (8-5)

The above weighing apparatus 10 includes one weighing unit 50, but the invention can also be applied to a weighing apparatus including two weighing units for weighing long articles. In this case, one digital filter out of the plurality of digital filters is selected for each of two original signals output from the weighing units.

### (8-6)

In the above weighing apparatus 10, the accuracy information is calculated based on the standard deviations of the amplitudes of the waveforms obtained by applying the digital filters to the original signal, but it is not limited to this. For example, the accuracy information may be calculated based on the standard deviations of derivatives of the amplitudes of the waveforms obtained by applying the digital filters to the original signal. The results of this calculation may be the standard deviations themselves of the derivatives of the amplitudes of the waveforms. Alternatively, the accuracy information may be calculated based on the standard deviations of second derivatives of the amplitudes of the waveforms obtained by applying the digital filters to the original signal. The results of this calculation may be the standard deviations themselves of the second derivatives of the amplitudes of the waveforms. Alternatively, the accuracy information may be calculated by subtracting the minimum value of the amplitudes of the waveforms from the maximum value.

### (8-7)

In the above weighing apparatus 10, the weighing unit 50 outputs a digital original signal as the original signal to the outside, but it is not limited to this. The weighing unit 50 may output the acquired analog original signal as the original signal to the outside. In this case, the control unit 80 digitally converts the analog original signal.

### REFERENCE SIGNS LIST

- 10: Weighing Apparatus
- 30: Conveyance Unit
- 50: Weighing Unit
- 72: Touch Panel (Display Unit)
- 80: Control Unit

### CITATION LIST

### <Patent Literature>

Patent Document 1: Domestic Re-publication of PCT International Application WO2015/141670

## Claims

1. A weighing apparatus for weighing articles, the weighing apparatus comprising:
a conveyance unit configured to convey the articles;
a weighing unit configured to output an original signal corresponding to forces acting on the conveyance unit; and
a control unit configured to control the conveyance unit and apply digital filters to the original signal,
wherein the control unit is further configured to
execute a selection process to select one of the digital filters out of a plurality of the digital filters and
execute the selection process based on results of applying a plurality of the digital filters to the original signal during a period from when the control unit sends a stop instruction to the conveyance unit to until the conveyance unit stops.

2. The weighing apparatus of claim 1, wherein the control unit is further configured to execute the selection process during an initial setting prior to weighing the articles.

3. The weighing apparatus of claim 1 or 2, wherein the control unit is further configured to determine, in the selection process, the number of the digital filters to apply to the original signal in accordance with the length of a time limit when applying the digital filters.

4. The weighing apparatus of claim 1 or 2, wherein the control unit is further configured to execute, in the selection process, the selection process based on results of applying a predetermined group of the digital filters to the original signal.

5. The weighing apparatus of claim 4, wherein the group of the digital filters are digital filters for removing a vibration component that occurs when the conveyance unit is conveying the articles.

6. The weighing apparatus of claim 1 or 2, wherein
the control unit is further configured to acquire from the weighing unit an original signal when the control unit determines that an external apparatus is running.

7. The weighing apparatus of claim 1 or 6, further comprising a display unit configured to display the results of applying a plurality of the digital filters to the original signal.

8. The weighing apparatus of claim 1 or 7, wherein, during the period, the control unit is further configured to control the conveyance unit in such a manner that the operating speed of the conveyance unit gradually becomes slower.

9. The weighing apparatus of claim 1 or 7, wherein the period is a period from when the control unit sends a stop instruction to the conveyance unit to until the conveyance unit naturally stops.

10. The weighing apparatus of claim 1 or 7, further comprising a brake configured to stop the operation of the conveyance unit,
wherein the control unit is further configured to execute the selection process based on results of applying a plurality of the digital filters to the original signal during a period from when it sends a stop instruction to the conveyance unit and sends an actuation instruction to the brake to until the conveyance unit stops.
